# EUROPÄISCHE PATENTSCHRIFT

(11) **EP 3 997 367 B1**
(45) Veröffentlichungstag und Bekanntmachung des Hinweises auf die Patenterteilung: **28.08.2024**
(21) Anmeldenummer: 20736689.9
(22) Anmeldetag: 03.07.2020
(51) Int. Cl.: F16K 1/12, F16K 1/52, F16K 1/54, F16K 3/34, F16K 31/54, F16K 47/04, F16K 47/08, F16C 29/02, F16C 31/02

(54) **ARMATURANORDNUNG**
ARMATURE ASSEMBLY
ENSEMBLE SOUPAPE

(30) Priorität: 12.07.2019 DE 102019004839; 23.06.2020 DE 102020003756
(43) Veröffentlichungstag der Anmeldung: 18.05.2022
(73) Patentinhaber: KSB SE & Co. KGaA, 67227 Frankenthal (DE)
(72) Erfinder: HANEWALD, Dieter, 67227 Frankenthal (DE); RAUCH, Gregor, 67227 Frankenthal (DE)
(74) Vertreter: Busch, Tobias
(86) Internationale Anmeldenummer: PCT/EP2020/068829
(87) Internationale Veröffentlichungsnummer: WO 2021/008903

(56) Entgegenhaltungen:
- DE-A1- 1 958 844
- DE-C- 138 916
- DE-U1- 20 311 032
- FR-A- 1 142 046
- GB-A- 1 138 895
- GB-A- 2 166 847
- RU-C1- 2 681 717
- US-A- 3 380 469
- US-A- 3 446 233
- US-A- 3 517 687
- US-A- 5 309 934
- US-A1- 2018 363 787
- US-B1- 6 216 721

## Beschreibung

Die Erfindung betrifft eine Armaturanordnung mit einem Gehäuse, mit mindestens zwei Öffnungen sowie einem sich in dem Gehäuse zwischen den Öffnungen erstreckenden Kanal, wobei in einem Drosselabschnitt des Kanals ein primäres Drosselmodul derart verfahrbar angeordnet ist, dass es den Querschnitt des Kanals im Drosselabschnitt begrenzt.

Derartige Armaturanordnungen werden üblicherweise in Anlagen zum Transport von Fluiden, wie Flüssigkeiten, Dämpfen oder Gasen, eingesetzt, um den Transport gezielt regeln bzw. steuern zu können. Zugleich kann auch eine vollständige Absperrung der Armaturanordnung erfolgen, wodurch der Transport des jeweiligen Fluids unterbrochen wird.

Die Auslegung derartiger Armaturanordnungen erfolgt einerseits anhand sicherheitsrelevanter Aspekte und andererseits anhand strömungstechnischer Überlegungen. So soll beispielsweise die Strömung in einem vollständig geöffneten Betriebszustand nur so gering wie möglich beeinflusst werden. Die Beeinflussung wird allgemein in Form eines Widerstandsbeiwertes bzw. Druckverlustbeiwertes angegeben. Dieser Beiwert ist ein Maß für den Druckverlust in einem durchströmten Bauteil und wird üblicherweise über die dimensionslose Kennzahl Zeta dargestellt, die den Druckunterschied zwischen Eintritt und Austritt der Armaturanordnung in das Verhältnis zu dem dynamischen Druck setzt.

Jede Störung der Strömung z.B. in Form einer Umlenkung oder Versperrung des Kanals führt demnach zu einem Druckverlust und folglich zu einer Erhöhung des Widerstandsbeiwertes. Bekannte Armaturanordnungsbauformen wie Kugelhähne weisen in einem vollständig geöffneten Betriebszustand aufgrund des geraden Durchgangs sehr kleine Widerstandsbeiwerte auf (Zeta = 0,11). Andere Bauformen wie das Hubventil haben durch die Strömungsumlenkung wesentlich größere Widerstandsbeiwerte (Zeta = 8,5).

Der Widerstandsbeiwert ist allerdings nicht das einzige Kriterium, anhand dessen die Auslegung einer Armaturanordnung erfolgt. Insbesondere wenn die Armaturanordnung vornehmlich zu Regelungszwecken eingesetzt wird, ist es erforderlich, dass in einem nicht vollständig geöffneten Zustand eine bestimmte Druckdifferenz zwischen Eintritt und Austritt der Armaturanordnung herbeigeführt wird. Diese Druckdifferenz wird dadurch erzielt, dass das Drosselmodul je nach Stellung den Querschnitt des Kanals begrenzt. Die Begrenzung führt zu einer Reduzierung des Druckes.

Die Begrenzung des Querschnittes und damit auch die Beeinflussung der Strömung ist somit maßgeblich von der Stellung des Drosselmoduls abhängig und wird üblicherweise über Kennlinien beschrieben, die den Durchfluss über die Stellung des Drosselmoduls abbilden. Standardmäßig eingesetzte Kennlinien sind lineare Kennlinien, bei denen gleiche relative Wegänderungen zu gleichen Änderungen des relativen Durchflusses führen. Alternativ sind gleichprozentige Kennlinien bekannt, bei denen gleiche relative Wegänderungen zu einer gleichen prozentualen Änderung des relativen Durchflusses führen. Sowohl lineare als auch gleichprozentige Kennlinien sind Standard. Beide sind gleichgestellt.

Diese Armaturen mit den definierten Kennlinien werden dazu genutzt, um strömungsführende Systeme zu regeln bzw. zu steuern. Eine Armatur kann aber nur dann in einem System eine regelnde Funktion einnehmen, wenn die Autorität hoch ist. Dies bedeutet, dass die Armatur maßgeblich den Druckverlust in einem strömungsführenden System bestimmt. Demnach ist die Autorität umso größer, je größer der über die Armatur erzielbare Druckverlust ist. Hierbei ist allerdings problematisch, dass Armaturanordnungen, die zwar eine große Autorität aufweisen, auf der anderen Seite auch in einem vollständig geöffneten Betriebszustand noch sehr große Widerstandsbeiwerte mit sich bringen. Andererseits weisen beispielsweise eine Klappe, ein Schieber oder ein Hahn keine großen Autoritäten auf, d.h. man kann mit ihnen nur schlecht regeln, aber dafür führen sie im voll geöffneten Zustand auch nur zu einem geringen Druckverlust.

In der US 3 517 687 A ist eine Ventil-Drehvorrichtung-Pumpe beschrieben, die schwingungsfrei in eine Betriebsleitung ausstößt und eine instabile Ausstoßdruck-Charakteristik aufweist, umfassend in Kombination, (a) eine Einrichtung zur beweglichen Befestigung eines Ventilkegels in einem Gehäuse mit einer Einlassöffnung zur Verbindung mit dem Pumpenauslass, einer Auslassöffnung zur Verbindung mit der Leitung und einem Hilfsauslass, der zwischen der Einlass- und der Auslassöffnung angeordnet ist, (b) ein Gehäuse mit einer Einlassöffnung zum Anschluss an den Pumpenauslass, einer Auslassöffnung zum Anschluss an die Leitung und einem Hilfsauslass, der sich zwischen der Einlass- und der Auslassöffnung befindet, (c) der Ventilkegel eine zweite Drosseleinrichtung trägt, die an der Einlassöffnung angeordnet ist, wobei die zweite Drosseleinrichtung stets eine Flüssigkeitsmenge durch die Einlassöffnung hindurchlässt, (d) die zweite Drosseleinrichtung, die mit der ersten Drosseleinrichtung zusammenwirkt, hat eine Drosseleinrichtung, die zweite Drosseleinrichtung in Zusammenarbeit mit der ersten Drosseleinrichtung den Flüssigkeitsstrom durch die Auslassöffnung bei instabilen Bedingungen in der Leitung einschränkt, aber nicht unterbricht, während die zweite Drosseleinrichtung den Flüssigkeitsstrom in die Einlassöffnung drosselt, die sich zwischen der ersten und der zweiten Hilfsdrosseleinrichtung befindet, (e) Mittel, die in der Vorrichtung angebracht sind, um den Flüssigkeitsstrom durch die zusätzliche Auslassöffnung zu steuern, (f) die Auslasssteuerungseinrichtung eine maximale Durchflussmenge durch die Hilfsauslassöffnung zulässt, wenn die Ventilauslassöffnung geschlossen ist und die Auslassöffnung, wenn die zweite Drosseleinrichtung einen im Wesentlichen freien Flüssigkeitsstrom in die Einlassöffnung zulässt.

Die US 3 446 233 A offenbart eine Ventilkonstruktion mit einem Ventilkörper, einer Ventilkammer in dem Körper, einem zu der Kammer führenden Fluideinlassdurchgang in dem Körper, einem von der Kammer wegführenden Fluidauslassdurchgang in dem Körper, einem zu der Kammer führenden Bypassdurchgang in dem Körper, einem ersten Ventilsitz in der Kammer, einem zweiten Ventilsitz in der Kammer, einem druckempfindlichen beweglichen Ventilelement in der Kammer, eine erste Sitzfläche auf dem Element, die so beschaffen ist, dass sie mit dem ersten Sitz zusammenwirkt, um die Fluidverbindung zwischen dem Einlass und dem Auslass zu steuern, und eine zweite Sitzfläche auf dem Element, die eine Reihe von Dichtungsabschnitten umfasst, die so beschaffen sind, dass sie mit dem zweiten Sitz zusammenwirken, um die Fluidverbindung zwischen dem Einlassdurchgang und dem Umgehungsdurchgang zu steuern, so dass der Umgehungsdurchgang mit dem Einlassdurchgang in Verbindung steht, wenn die erste Sitzfläche in Sitzkontakt mit dem ersten Sitz ist, und der Auslassdurchgang mit dem Einlassdurchgang in Verbindung steht, wenn die zweite Sitzfläche in Sitzkontakt mit dem zweiten Sitz ist.

Die US 2018 363 787 A1 zeigt ein Steuerventil, das einen Ventilkörper mit einem Hauptventilkanal umfasst. Eine Durchflusssteuerungsbaugruppe ist im Hauptventildurchgang angeordnet und umfasst ein erstes Steuerelement und ein zweites Steuerelement, das relativ zum ersten Steuerelement zwischen einer geschlossenen Stellung, einer ersten Stellung und einer zweiten Stellung drehbar ist. In der geschlossenen Stellung bilden das erste und das zweite Steuerelement einen Stopfen, der den Durchfluss von Flüssigkeit durch den Hauptventildurchgang verhindert. In der ersten Stellung bilden das erste und das zweite Steuerelement gemeinsam einen ersten Steuerdurchgang, und in der zweiten Stellung bilden das erste und das zweite Steuerelement gemeinsam den ersten Steuerdurchgang und einen zweiten Steuerdurchgang.

In der GB 2 166 847 A ist ein axial durchströmtes Ventil mit großer Nennweite, mit einem Gehäuse und mindestens einem darin verschiebbaren Sperrglied beschreiben, wobei innerhalb des Gehäuses eine zur Durchflussachse koaxiale Hülse durch am Gehäuse befestigte, in Durchflussrichtung angeordnete Rippen fixiert ist und sich in der Hülse das eine oder mehrere in Richtung der Durchflussachse verschiebbare Sperrglied und ein dieses verschiebender Mechanismus befinden.

Die FR 1 142 046 A offenbart einen Hahn mit doppelter Regulierung, der insbesondere bei Heizkörpern verwendet werden kann. Der Verschluss, in dem sich die Nadel zum Öffnen und Schließen des Ventils bewegen kann, besteht aus einer drehbaren zylindrischen Hülse, die ein Fenster aufweist, das sich vor einem Fenster des Ventilkörpers bewegen soll.

Je nach Anwendungsfall und Einsatzzweck entscheiden daher der gewählte Widerstandsbeiwert und damit die daraus resultierende erforderliche Autorität über die Bauform der Armatur. Der gewählte Widerstandsbeiwert definiert die Autorität.

Vor diesem Hintergrund liegt der vorliegenden Erfindung die Aufgabe zugrunde, eine Armaturanordnung anzugeben, die einen universellen Einsatz in strömungsführenden Systemen ermöglicht.

Diese Aufgabe wird gelöst durch eine Armaturanordnung gemäß Anspruch 1. Erfindungsgemäß ist in dem Kanal zumindest ein sekundäres Drosselmodul bestehend aus zumindest einem ersten und einem zweiten Drosselelement in Kanalrichtung vor oder hinter dem primären Drosselmodul angeordnet, wobei die Drosselelemente des sekundären Drosselmoduls derart relativ zueinander bewegt werden können, dass sich in einem betriebsgemäßen Zustand der Strömungswiderstand eines durchströmenden Fluids in Abhängigkeit von der Stellung der Drosselelemente verändert.

Bei den bislang bekannten Drosselventilen wurde der Durchfluss und der daraus resultierende Strömungswiderstand einzig von dem Ventilhub des primären Drosselmoduls eingestellt. Durch das zusätzliche dynamische Drosselmodul kann nun das Einsatzgebiet deutlich erweitert werden, da eine variable Einstellung des Widerstandes unabhängig vom Hub möglich ist. Demnach weist das zweite Drosselmodul eine Ausgestaltung auf, bei der sich durch Bewegung der Drosselelemente zu- oder gegeneinander der Strömungswiderstand ändert.

Das primäre Drosselmodul ist vorzugsweise als Ventil mit einem Absperrkörper und einem Ventilsitz ausgebildet, wobei sich der Absperrkörper beim Öffnen und Schließen des Ventils in Strömungsrichtung bzw. entgegen der Strömungsrichtung bewegt. Alternativ könnte das primäre Drosselmodul auch mit einem Kugelhahn, einer Klappe oder einem Schieber als Absperrkörper ausgebildet sein, wobei sich in diesem Fall der Absperrkörper vorzugsweise senkrecht zur Strömungsrichtung bewegt.

Grundsätzlich kann die Erfindung bereits mit nur einem sekundären Drosselmodul bestehend aus zwei Drosselelementen ausgeführt werden. Es sind jedoch auch Ausgestaltungen mit drei, vier oder mehr Drosselmodulen und/oder jeweils drei, vier oder mehr Drosselelementen möglich.

Um die Drosselelemente des sekundären Drosselmoduls gegeneinander bewegen zu können, ist vorzugsweise zumindest das erste Drosselelement bewegbar und zumindest das zweite Drosselelement feststehend ausgebildet. Hierzu können die feststehenden Drosselelemente unmittelbar in dem Gehäuse gebildet sein und beispielsweise einen Wandungsabschnitt des Kanals darstellen. Alternativ sind die feststehenden Drosselelemente in einer Hülse gebildet, die in dem Kanal angeordnet und gegenüber den Kanalwandungen befestigt ist.

Dadurch, dass zumindest die zweiten Drosselelemente feststehend ausgebildet sind, können sie auch als Führung für die bewegbaren ersten Drosselelemente dienen.

Für die Bewegung der zumindest zwei Drosselelemente haben sich zwei Ausgestaltungsvarianten als besonders geeignet herausgestellt. Demnach ist gemäß einer ersten Variante das erste Drosselelement gegenüber dem zweiten Drosselelement in Kanalrichtung verfahrbar ausgebildet. Gemäß einer zweiten Variante ist das erste Drosselelement alternativ oder zusätzlich gegenüber dem zweiten Drosselelement rotierbar.

Unabhängig von der Art und Weise wie die Drosselelemente zu- bzw. gegeneinander bewegt werden können, sind die Drosselelemente erfindungsgemäß derart ausgebildet und zueinander angeordnet, dass sich eine effektiv durchströmbare Querschnittsfläche im Kanal verändert, wenn die Drosselelemente des sekundären Drosselmoduls relativ zueinander bewegt werden. Erfindungsgemäß weist zumindest eines der Drosselelemente eine oder mehrere Durchbrechungen auf, die die effektiv durchströmbare Querschnittsfläche bilden. Durch Rotation und/oder Verfahren des ersten Drosselelemente können einzelne dieser Durchbrechungen freigegeben oder versperrt werden. Das Versperren einzelner Durchbrechungen führt zu einer Begrenzung der effektiv durchströmbaren Fläche, so dass mit dem Grad der Versperrung auch der Widerstand ansteigt, den das Drosselmodul auf die Strömung ausübt. Durch Freigeben der Kanäle wird der Strömungswiderstand wieder abgebaut.

Die Durchbrechungen bilden somit einzelne Drosselkanäle, durch die die Strömung im freigegebenen Zustand strömen kann. Diese Drosselkanäle können hierbei systematisch in Kanalrichtung und/oder senkrecht zur Kanalrichtung, z.B. bei einem runden Kanal in radialer Richtung, verlaufen. Auch eine bogenförmige Ausbildung ist möglich. Alternativ kann zumindest eines der Drosselelemente nach Art eines Schwammes ausgebildet sein, so dass die Durchbrechungen in Form von chaotisch zueinander angeordneten Drosselkanälen in dem zumindest einen Drosselelement angeordnet sind.

Bevorzugt weist das erste und/oder das zweite Drosselelement auch eine gegenüber dem Kanal erhöhte Oberflächenrauigkeit auf. Diese Oberflächenrauigkeit schlägt sich in den Drosselkanälen nieder, kann aber auch in den äußeren Flächen der Drosselelemente auftreten. Diese definierte Oberflächengeometrie beeinflusst die Randschichtströmung und dadurch erhöht sich der Strömungswiderstand in Abhängigkeit der Strömungsgeschwindigkeit. Sowohl die Lage und Ausbildung der effektiv durchströmbaren Fläche als auch die Flächen mit erhöhter Oberflächenrauigkeit richten sich insbesondere danach, wie die einzelnen Drosselelemente zueinander angeordnet sind. Vorzugsweise wird diese strömungsbeeinflussende Oberflächenrauigkeit in den Drosselkanälen ausgebildet.

Beispielsweise können zumindest das erste und das zweite Drosselelement in Kanalrichtung nebeneinander angeordnet sein. Demnach führt ein Verfahren des ersten Drosselelementes dazu, dass sich der Abstand zwischen dem ersten und dem zweiten Drosselelement entweder vergrößert oder verringert. Zur Verwirklichung der Erfindung können demnach sowohl in dem ersten als auch in dem zweiten Drosselelement Durchbrechungen angeordnet sein, die die effektiv durchströmbare Fläche bilden. Die Durchbrechungen sind derart in den Drosselelementen angeordnet, dass diese bei einer Anordnung der Drosselelemente unmittelbar nebeneinander nicht miteinander fluchten bzw. Durchbrechung des ersten Drosselelementes an Abschnitten des zweiten Drosselelementes anliegen, die frei von Durchbrechungen sind und umgekehrt. Sobald sich der Abstand der Drosselelemente zueinander vergrößert, bildet sich eine Zwischenkammer zwischen den Drosselelementen aus, die einerseits eine Fluidverbindung zwischen den Durchbrechungen der Drosselelemente herstellt und die andererseits zu einer Beruhigung der Strömung beiträgt. Sofern die Drosselelemente gegeneinander rotiert werden, können auch hier Stellungen mit fluchtenden Durchbrechungen und Stellungen mit nicht-fluchtenden Durchbrechungen gebildet werden. Eine Zwischenkammer ebenfalls möglich aber nicht zwingend erforderlich.

Alternativ ist das zweite Drosselelement hülsenartig ausgebildet und das erste Drosselelement innerhalb des zweiten Drosselelementes angeordnet. Demnach sind die Drosselelemente in dem Kanal übereinander bzw. untereinander angeordnet, so dass die Drosselelemente in Kanalrichtung überlappen. Durch Verfahren des ersten Drosselelementes ändert sich der Anteil der Überlappung. Bei einer solchen Ausgestaltung kann die Erfindung beispielsweise derart verwirklicht sein, dass in dem zweiten Drosselelement, insbesondere bogenförmige Durchbrechungen vorgesehen sind, die an einer Stirnseite und damit horizontal zur Kanalrichtung beginnen und senkrecht zur Kanalrichtung bzw. in radialer Richtung enden. Die Stellung des innenliegenden zweiten Drosselelementes bestimmt demnach, wie viele der Durchbrechungen am Ende versperrt werden.

Alternativ weist das zweite Drosselelement eine oder mehrere in Kanalrichtung hintereinander angeordnete zahnartige Rücksprünge und das erste Drosselelement eine oder mehrere in Kanalrichtung hintereinander angeordnete vorstehende Scheibenabschnitte auf, wobei die Scheibenabschnitte und die Rücksprünge so zueinander angeordnet sind, dass sich in einem geöffneten Zustand des sekundären Drosselmoduls eine Strömung durch die zahnartige Rücksprünge über die Scheiben einstellt. Bei einer solchen Ausgestaltung kann auf zusätzliche Durchbrechungen verzichtet werden, weil dann in diesem Fall die zahnartigen Rücksprünge und die Scheibenabschnitte die effektiv durchströmbare Fläche bestimmen. Dennoch können auch hier Durchbrechungen vorgesehen sein.

Um die Drosselelemente verfahren und/oder rotieren zu können, sind die bewegbar ausgebildeten Drosselelemente bzw. ist zumindest das erste Drosselelement auf einer Sekundärdrosselführungsschiene angeordnet, die sich zumindest abschnittsweise innerhalb des Kanals erstreckt. Diese Sekundärdrosselführungsschiene kann demnach verfahren und/oder rotiert werden. Die Sekundärdrosselführungsschiene wird mit bekannten Abdichtsystemen aus dem Armaturengehäuse geführt und von außen je nach Ausführung der Drosselelemente drehend oder linear angetrieben.

Auch das primäre Drosselmodul weist bevorzugt eine Primärdrosselführungsschiene auf, über die eine Einstellung des Ventilhubes möglich ist. Die Primärdrosselführungsschiene und die Sekundärdrosselführungsschiene können entweder unabhängig oder abhängig voneinander verstellbar ausgebildet sein. Sofern beide Führungsschienen nicht voneinander abhängig sind, kann die Kennlinie durch gezielte Einstellung der einzelnen Drosselmodule beeinflusst werden. Sofern beide Führungsschienen miteinander verbunden sind oder eine strukturelle Einheit bilden, hat eine Einstellung des primären Drosselmoduls auch einen unmittelbaren Einfluss auf das sekundäre Drosselmodul. Eine strukturelle Einheit der Führungsschienen hat darüber hinaus den Vorteil, dass eine Führung über die feststehenden Drosselelemente auch für das erste Drosselmodul möglich ist.

Bevorzugt weist der Kanal keine Abwinklung auf, aber es kann auch eine Abzweigung beispielsweise zur Bildung eines Dreiwegeventils vorhanden sein. Dabei kann das sekundäre Drosselmodul eine gezielte Aufteilung der Ströme ermöglichen.

Bei einer fehlenden Abwinklung des Kanals wird gewährleistet, dass keine Umlenkung der Strömung erfolgt. Dies schließt natürlich nicht aus, dass beispielsweise aufgrund einer Erweiterung oder Verjüngung des Kanalquerschnittes einzelne Stromlinien eine Umlenkung erfahren können. Folglich weist die Strömung in einem betriebsgemäßen Zustand die gleich Zu- und Abströmrichtung in bzw. aus der Armaturanordnung auf, wodurch der Druckverlust und damit auch der Widerstandsbeiwert reduziert werden können.

Hierzu trägt auch bei, dass das erste Drosselelement bevorzugt parallel zum Drosselabschnitt verfahrbar ist. Hierdurch kann eine kontinuierliche und gleichmäßige Begrenzung des Kanalquerschnitts erreicht werden. Bei bekannten Hubventilen erfolgt die Begrenzung des Kanalquerschnittes durch ein Verfahren senkrecht zum Kanal. Sofern der Kanal beispielsweise im Querschnitt rund ausgebildet ist, führt unabhängig von der Ausgestaltung des Drosselmoduls jede Drosselstellung zu einer Änderung der Querschnittsform. Durch die vorliegende Erfindung ist es nunmehr möglich, dass eine Änderung der Querschnittsfläche des Kanals herbeigeführt wird, ohne die Querschnittsform des Kanals zu beeinflussen.

Das Gehäuse kann sowohl mehrteilig als auch einteilig ausgebildet sein.

Nachfolgend wird die Erfindung anhand von lediglich ein Ausführungsbeispiel zeigenden Zeichnungen näher erläutert. Es zeigen:
- Fig. 1: ein Querschnitt einer erfindungsgemäßen Armaturanordnung,
- Fig. 2,3,4: sekundäre Drosselmodule mit nebeneinander angeordneten Drosselelementen,
- Fig. 5,6,7: sekundäre Drosselmodule mit ineinander angeordneten Drosselelementen.

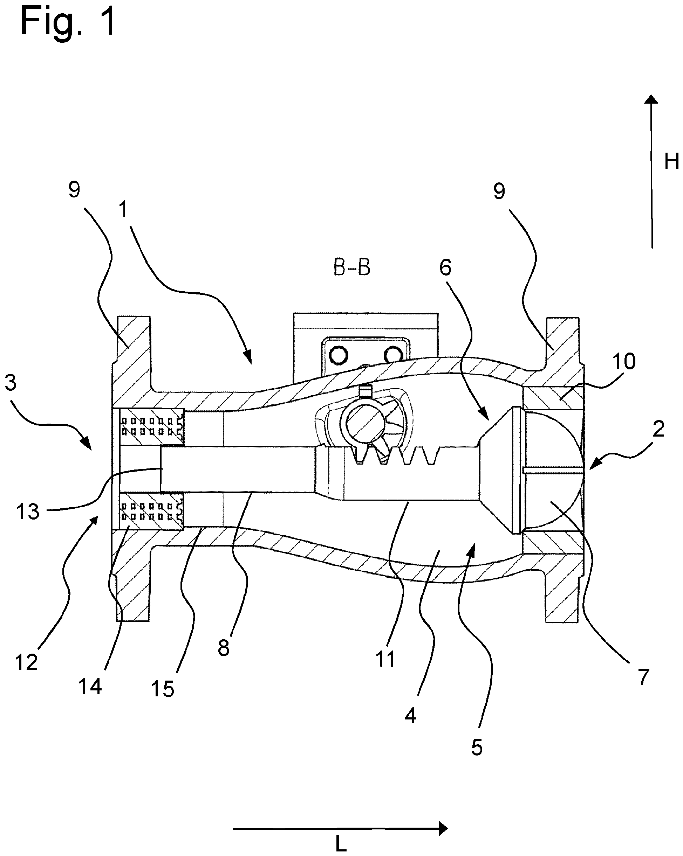

Die Fig. 1 zeigt eine erfindungsgemäße Armaturanordnung. Die Armaturanordnung weist ein Gehäuse 1, das an beiden Enden über jeweils einen Flansch 9 in einer strömungsführenden Anlage z.B. Rohrleitungen verbaut werden kann. Die Flansche 9 weisen Bohrungen für die Aufnahme von Befestigungsmitteln auf. Hierbei handelt es sich bevorzugt um Schraubverbindungen.

In dem Gehäuse 1 ist ein Kanal 4 vorgesehen, der an den Enden des Gehäuses 1 in eine erste und in eine zweite Öffnung 2,3 mündet. Die Armaturanordnung wird in einem betriebsgemäßen Zustand derart betrieben, dass die erste Öffnung 2 als Eintrittsöffnung und die zweite Öffnung 3 als Austrittsöffnung für die Strömung eingerichtet ist. Demnach strömt ein Betriebsmedium entgegen der dargestellten Kanalrichtung L.

Der Kanal 4 weist entlang der Kanalrichtung L keine Abwinklung auf. Dies bedeutet, dass eine Strömung keine gehäusebedingte Umlenkung aufweist bzw. dass die Flächenmittelpunkte einer Querschnittsfläche des Kanals 4 entlang der Längsrichtung L auf einer Höhe angeordnet sind. Diese Ausgestaltung hat zur Folge, dass sich in einem vollständig geöffneten Zustand der Armaturanordnung ein nur sehr geringer Druckverlust zwischen den Öffnungen 2,3 ausbildet. Wenngleich der Kanal 4 ohne Abwinklung ausgebildet ist, so weitet sich dieser dennoch ausgehend von der zweiten Öffnung 3 entlang der Kanalrichtung L bis kurz vor der ersten Öffnung 2 auf, wobei dann bis zur ersten Öffnung 2 eine Verjüngung des Kanals 4 erfolgt.

Zur Drosselung der Armaturanordnung ist ein primäres Drosselmodul 6 bestehend aus einem Drosselkopf 7 und einer Antriebsstange 8 in einem Drosselabschnitt 5 des Kanals 4 angeordnet und gegenüber dem Drosselabschnitt 5 parallel entlang der Kanalrichtung L verfahrbar. Der Drosselabschnitt 5 ist ohne Abwinklung ausgebildet, wobei die dargestellte Armaturanordnung, wie bereits zuvor erläutert, entlang des gesamten Kanals 4 keine Abwinklung aufweist.

Der Drosselkopf 7 ist in Form eines Parabolkegels ausgebildet und schließt in einem vollständig geschlossenen Zustand der Armaturanordnung dichtend mit einem Ventilsitz ab. Dieser Ventilsitz ist an einem separaten Ventilsitzteil 10 gebildet, wobei das Ventilsitzteil in der ersten Öffnung 2 angeordnet ist. Zwischen dem Drosselkopf 7 und dem Ventilsitzteil 10 bildet sich stets die engste durchströmbare Stelle der Armaturanordnung aus, so dass durch die konkrete Ausgestaltung dieser Bauteile der erforderliche Druckverlust über die Armaturanordnung in Abhängigkeit der Stellung des primären Drosselmoduls 6 bestimmt werden kann.

Um die Stellung des primären Drosselmoduls 6 einstellen bzw. um das primäre Drosselmodul 6 verfahren zu können ist der Drosselkopf 7 an einem Ende der Antriebsstange 8 angeordnet und ein Abschnitt der Antriebsstange 8 als Zahnstangenabschnitt 11 ausgebildet. Die Antriebsstange 8 bildet zugleich die gemeinsame Primärdrosselführungsschiene und die Sekundärdrosselführungsschiene. Der Zahnstangenabschnitt 11 weist mehrere hintereinander angeordnete Zähne auf. Dieser Zahnstangenabschnitt 11 wirkt mit einem Zahnrad 12 zusammen, das drehbar im Kanal 4 angeordnet ist und über eine Zahnradwelle von außen betätigt werden kann. Dadurch dass das Zahnrad 12 mit dem Zahnstangenabschnitt 11 in Eingriff steht, führt eine Rotation der Zahnradwelle zu einer linearen Bewegung des primären Drosselmoduls 6 entlang oder in entgegen der Kanalrichtung L. Die Richtung der Bewegung ist hierbei abhängig von der Rotationsrichtung der Zahnradwelle.

Zur Betätigung der Zahnradwelle ist diese mit einem nicht dargestellten Antrieb verbunden, wobei das primäre Drosselmodul 6 zwischen einer vollständig geschlossenen in eine vollständig geöffnete Stellung durch eine Drehung der Zahnradwelle bewegt wird.

Die Antriebsstange 8 ist vollständig innerhalb des Kanals 4 angeordnet und wird über ein sekundäres Drosselmodul 12 und den Drosselkopf 2 linear entlang oder entgegen der Kanalrichtung L geführt. Das sekundäre Drosselmodul 12 kann grundsätzlich in unterschiedlicher Art und Weise ausgebildet sein, wobei in dem gezeigten Beispiel das sekundäre Drosselmodul 12 über zwei relativ zueinander in Kanalrichtung L verfahrbare Drosselelemente 13,14 realisiert ist, wobei das zweite Drosselelement 14 fest an der Kanalwandung 15 befestigt und das erste Drosselelement 13 auf einem Abschnitt der Antriebsstange gebildet ist. Durch Verfahren der Antriebsstange 8 werden die Durchbrechungen in dem sekundären Drosselmodul 12 freigegeben oder versperrt, so dass sich in Abhängigkeit der Stellung der Antriebsstange 8 der Strömungswiderstand ändert.

Abweichend zur Darstellung gemäß Figur 1 kann die Armatur auch mit vertikalem Verfahrweg ausgestaltet werden.

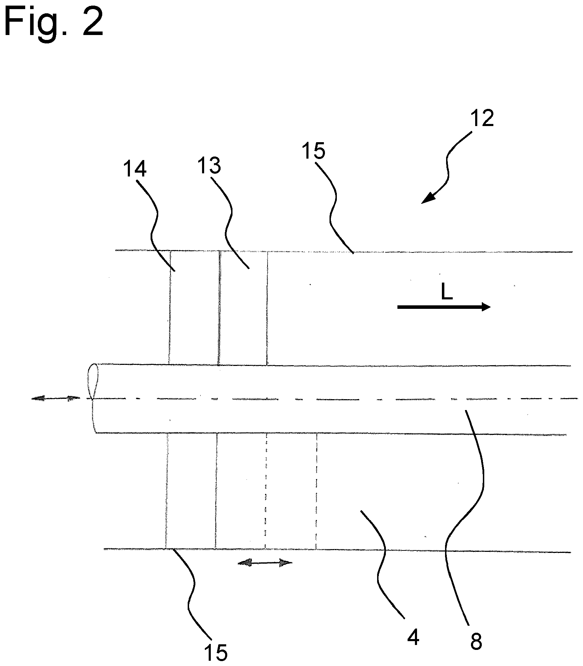

Die Figur 2 zeigt in allgemeiner Art und Weise, wie die Drosselelemente 13,14 gemäß einer ersten Variante zueinander angeordnet sein können, um durch Bewegung des ersten Drosselelementes 13 eine Änderung des effektiv durchströmbaren Querschnittes zu bewirken. Demnach sind die Drosselelemente 13,14 in Kanalrichtung L nebeneinander angeordnet und das erste Drosselelement 13 ist mit der Antriebsstange 8 verbunden. Der obere Bereich des Kanals 4 zeigt hierbei das erste Drosselelement 13 in einer geschlossenen und der untere Bereich des Kanals 4 das erste Drosselelemente 13 in einer geöffneten Stellung.

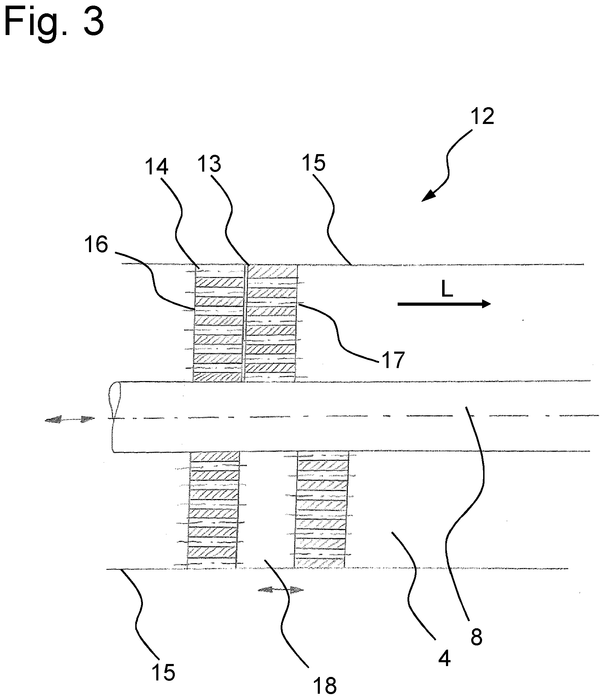

Eine mögliche Ausgestaltung der Drosselelemente 13,14 ist der Figur 3 zu entnehmen. Hierbei weisen die Drosselelemente 13,14 Durchbrechungen 16,17 auf, die sich in Kanalrichtung L durch die Drosselelemente 13,14 erstrecken und senkrecht zur Kanalrichtung L versetzt zueinander angeordnet sind. Demnach fluchten die Durchbrechungen 16,17 der Drosselelemente 13,14 nicht in einem geschlossenen Zustand. Wird das erste Drosselelement 13 hingegen in Kanalrichtung L verfahren, bildet sich eine Zwischenkammer 18 zwischen den Drosselelementen 13,14, der Kanalwandung 15 und der Antriebsstange 8. Über die Zwischenkammer 18 stehen die Durchbrechungen 16,17 miteinander in Verbindung und ermöglichen eine Strömung durch die Drosselelemente 13,14 hindurch.

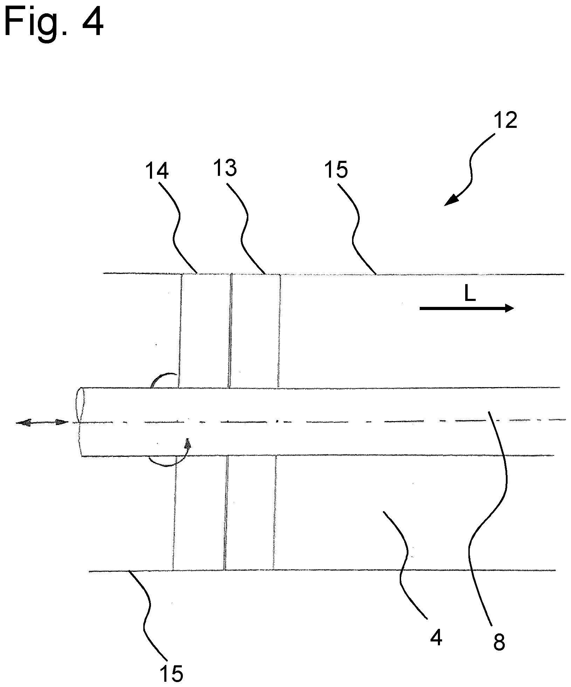

Gemäß der Figur 4 kann das erste Drosselelement 13 auch rotierbar ausgebildet sein, wobei dann der Durchfluss durch die Winkelstellung des ersten Drosselelement 13 bestimmt wird. Sofern auch hier Durchbrechungen 16,17 in den Drosselelementen 13,14 vorgesehen sind, führt eine Rotation dazu, dass sich der Anteil miteinander fluchtender Durchbrechungen 16,17 ändert.

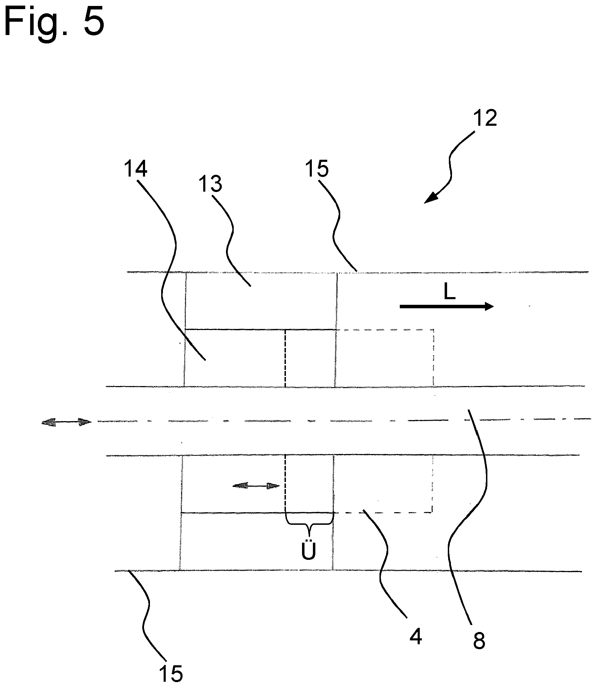

Gemäß einer zweiten in der Figur 5 gezeigten Variante können die Drosselelemente 13,14 in Kanalrichtung L auch ineinander angeordnet sein. Die gestrichelte Linie verdeutlicht, wie ein Überlappungsbereich Ü zwischen den Drosselelementen 13,14 durch Verfahren des ersten Drosselelementes 13 geändert werden kann. Dieser Überlappungsbereich Ü kann maßgeblich für die effektiv durchströmbare Fläche sein.

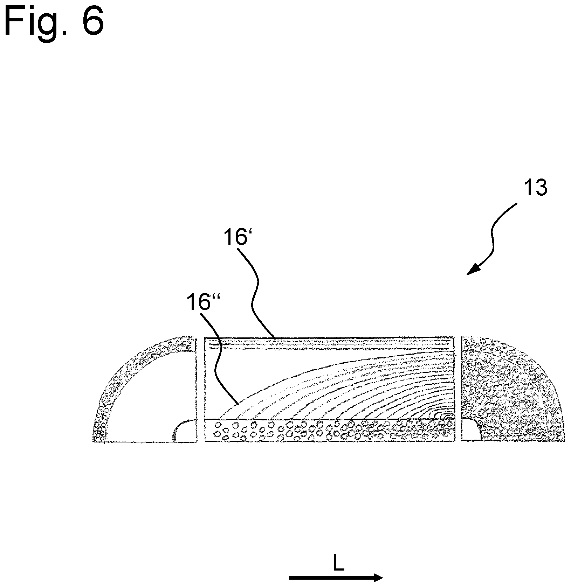

Dies wird beispielsweise durch die Figur 6 deutlich, die ein mögliches erstes Drosselelement 13 in einem Querschnitt zeigt. Ferner ist lediglich ein Abschnitt des ersten Drosselelementes 13 gezeigt, das sich bevorzugt vollumfänglich in dem Kanal 4 erstreckt. Die beiden äußeren Flächen verdeutlichen die Stirnflächen.

Demnach erstrecken sich erste Kanäle 16' durch das gesamte erste Drosselelement 13, so dass unabhängig von der Stellung des zweiten Drosselelementes 14 stets ein gewisser Durchfluss gewährleistet wird.

Ein Vergleich mit der Figur 5 zeigt, dass das zweite Drosselelement 14 unterhalb des ersten Drosselelementes 13 gemäß der Figur 6 angeordnet ist und zweite Durchbrechungen 16" freigeben oder versperren kann. Diese zweiten Durchbrechungen 16" sind bogenförmig ausgebildet und enden jeweils an einer Stirnfläche und an einer an das zweite Drosselelement 14 angrenzenden Fläche. Durch Änderung des Überlappungsbereiches Ü werden demnach mehr oder weniger der Durchbrechungen 16" freigegeben, so dass sich die effektiv durchströmbare Fläche anhand der Anzahl der freigegebenen Durchbrechungen 16" bemisst.

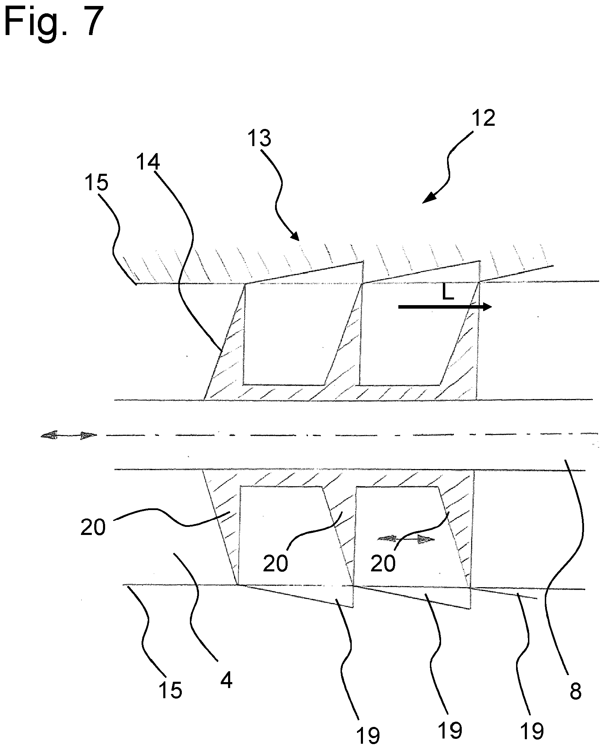

Eine alternative Ausgestaltungsform zeigt die Figur 7. Das zweite Drosselelement 14 weist drei in Kanalrichtung hintereinander angeordnete zahnartige Rücksprünge 19 und das erste Drosselelement 13 drei in Kanalrichtung hintereinander angeordnete vorstehende Scheibenabschnitte 20 auf, wobei die Scheibenabschnitte 20 und die Rücksprünge 19 so zueinander angeordnet sind, dass sich in einem geöffneten Zustand des sekundären Drosselmoduls 12 eine Strömung durch die zahnartige Rücksprünge 19 über die Scheibenabschnitte 20 einstellt.

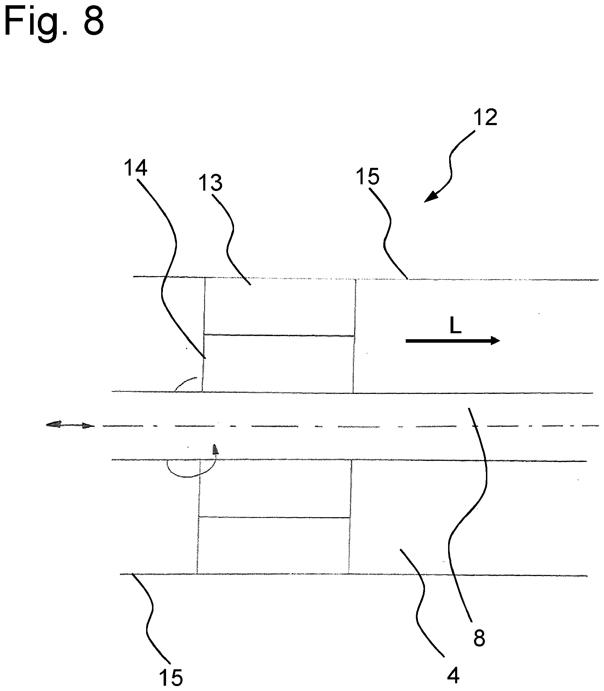

Gemäß der Figur 8 kann auch hier das erste Drosselelement 13 rotierbar ausgebildet sein, wobei das erste Drosselelement 13 innerhalb des zweiten Drosselelementes 14 rotiert und hierbei mehr oder weniger Durchbrechungen 16" freigeben kann.

## Patentansprüche

1. Armaturanordnung mit einem Gehäuse (1), mit mindestens zwei Öffnungen (2,3) sowie einem sich in dem Gehäuse (1) zwischen den Öffnungen (2,3) erstreckenden Kanal (4), wobei in einem Drosselabschnitt (5) des Kanals (4) ein primäres Drosselmodul (6) derart verfahrbar angeordnet ist, dass es den Querschnitt des Kanals (4) im Drosselabschnitt (5) begrenzt,
wobei in dem Kanal (4) zumindest ein sekundäres Drosselmodul (12) bestehend aus zumindest einem ersten und einem zweiten Drosselelement (13,14) in Kanalrichtung (L) vor oder hinter dem primären Drosselmodul (6) angeordnet ist, wobei die Drosselelemente (13,14) des sekundären Drosselmoduls (12) derart relativ zueinander bewegt werden können, dass sich in einem betriebsgemäßen Zustand der Strömungswiderstand eines durchströmenden Fluids in Abhängigkeit von der Stellung der Drosselelemente (13,14) verändert,
**dadurch gekennzeichnet, dass**
die Drosselelemente (13,14) derart ausgebildet und zueinander angeordnet sind, dass sich eine effektiv durchströmbare Querschnittsfläche im Kanal (4) verändert, wenn die Drosselelemente (13,14) des sekundären Drosselmoduls (12) relativ zueinander bewegt werden und zumindest eines der Drosselelemente (13,14) eine oder mehrere Durchbrechungen (15,16,16',16") aufweisen, die die effektiv durchströmbare Querschnittsfläche bilden und durch Rotation und/oder Verfahren des ersten Drosselelements (13) einzelne dieser Durchbrechungen (15, 16, 16', 16") freigeben oder versperrt werden können.

2. Armaturanordnung nach Anspruch 1, **dadurch gekennzeichnet, dass** zumindest das erste Drosselelement (13) als bewegbares und zumindest das zweite Drosselelement (14) als feststehendes Drosselelement ausgebildet ist.

3. Armaturanordnung nach Anspruch 2, **dadurch gekennzeichnet, dass** feststehende Drosselelemente (14) unmittelbar in dem Gehäuse (1) gebildet sind.

4. Armaturanordnung nach Anspruch 2, **dadurch gekennzeichnet, dass** feststehende Drosselelemente (14) in einer Hülse gebildet sind, die in dem Kanal (4) angeordnet und gegenüber Kanalwandungen (15) befestigt ist.

5. Armaturanordnung nach einem der Ansprüche 1 bis 4, **dadurch gekennzeichnet, dass** das erste Drosselelement (13) gegenüber dem zweiten Drosselelement (14) in Kanalrichtung (L) verfahrbar ist.

6. Armaturanordnung nach einem der Ansprüche 1 bis 5, **dadurch gekennzeichnet, dass** das erste Drosselelement (13) gegenüber dem zweiten Drosselelement (14) rotierbar ist.

7. Armaturanordnung nach einem der Ansprüche 1 bis 6, **dadurch gekennzeichnet, dass** zumindest das erste und das zweite Drosselelement (13,14) in Kanalrichtung (L) nebeneinander angeordnet sind.

8. Armaturanordnung nach einem der Ansprüche 1 bis 7, **dadurch gekennzeichnet, dass** das erste Drosselelement (13) hülsenartig ausgebildet ist und das zweite Drosselelement (14) innerhalb des ersten Drosselelementes (13) angeordnet ist.

9. Armaturanordnung nach Anspruch 8, **dadurch gekennzeichnet, dass** das erste Drosselelement (13) eine oder mehrere in Kanalrichtung (L) hintereinander angeordnete zahnartige Rücksprünge (19) und das zweite Drosselelement (14) eine oder mehrere in Kanalrichtung (L) hintereinander angeordnete vorstehende Scheibenabschnitte (20) aufweist, wobei die Scheibenabschnitte (20) und die Rücksprünge (19) so zueinander angeordnet sind, dass sich in einem geöffneten Zustand des sekundären Drosselmoduls (12) eine Strömung durch die zahnartige Rücksprünge (19) über die Scheibenabschnitte (20) einstellt.

10. Armaturanordnung nach einem der Ansprüche 1 bis 9, **dadurch gekennzeichnet, dass** bewegbare Drosselelemente (13) auf einer Sekundärdrosselführungsschiene angeordnet sind, die sich zumindest abschnittsweise innerhalb des Kanals (4) erstreckt.

11. Armaturanordnung nach einem der Ansprüche 1 bis 10, **dadurch gekennzeichnet, dass** das zumindest eine sekundäre Drosselmodul (12) unabhängig von dem primären Drosselmodul (6) verfahrbar ist.

12. Armaturanordnung nach einem der Ansprüche 1 bis 11, **dadurch gekennzeichnet, dass** das zumindest eine sekundäre Drosselmodul (12) zusammen mit dem primären Drosselmodul (6) verfahrbar ist.

13. Armaturanordnung nach Anspruch 12, **dadurch gekennzeichnet, dass** das primäre Drosselmodul (6) eine Primärdrosselführungsschiene aufweist, die mit der Sekundärdrosselführungsschiene verbunden oder die gemeinsam mit der Sekundärdrosselführungsschiene ausgebildet ist.

14. Armaturanordnung nach einem der Ansprüche 1 bis 13, **dadurch gekennzeichnet, dass** zwei oder mehr sekundäre Drosselmodule (12) in dem Kanal (4) angeordnet sind.

15. Armaturanordnung nach einem der Ansprüche 1 bis 14, **dadurch gekennzeichnet, dass** der Kanal (4) keine Abwinklung aufweist.

16. Armaturanordnung nach einem der Ansprüche 1 bis 15, **dadurch gekennzeichnet, dass** das Gehäuse (1) einteilig ausgebildet ist.

## Claims

1. Armature assembly with a housing (1), with at least two openings (2, 3), and with a channel (4) extending in the housing (1) between the openings (2, 3), wherein a primary throttle module (6) is arranged in a throttle section (5) of the channel (4) so that it can be displaced in such a way that it limits the cross section of the channel (4) in the throttle section (5), wherein at least one secondary throttle module (12) consisting of at least a first and a second throttle element (13, 14) are arranged in the channel (4) upstream or downstream from the primary throttle module (6) in the direction (L) of the channel, wherein the throttle elements (13, 14) of the secondary throttle module (12) can be moved relative to each other in such a way that, in a proper operating state, the flow resistance of a fluid flowing through changes depending on the position of the throttle elements (13,14), **characterized in that** the throttle elements (13, 14) are designed and arranged relative to each other in such a way that an effective flow cross-sectional area in the channel (4) changes when the throttle elements (13, 14) of the secondary throttle module (12) are moved relative to each other and at least one of the throttle elements (13, 14) has one or more apertures (15, 16, 16', 16") which form the effective flow cross-sectional area and individual apertures of these apertures (15, 16, 16', 16") can be unblocked or blocked by rotation and/or displacement of the first throttle element (13).

2. Armature assembly according to Claim 1, **characterized in that** at least the first throttle element (13) is designed as a movable throttle element and at least the second throttle element (14) as a stationary throttle element.

3. Armature assembly according to Claim 2, **characterized in that** stationary throttle elements (14) are formed directly in the housing (1).

4. Armature assembly according to Claim 2, **characterized in that** stationary throttle elements (14) are formed in a sleeve which is arranged in the channel (4) and fastened relative to channel walls (15) .

5. Armature assembly according to one of Claims 1 to 4, **characterized in that** the first throttle element (13) can be displaced relative to the second throttle element (14) in the direction (L) of the channel.

6. Armature assembly according to one of Claims 1 to 5, **characterized in that** the first throttle element (13) can be rotated relative to the second throttle element (14).

7. Armature assembly according to one of Claims 1 to 6, **characterized in that** at least the first and the second throttle element (13, 14) are arranged next to each other in the direction (L) of the channel.

8. Armature assembly according to one of Claims 1 to 7, **characterized in that** the first throttle element (13) is designed as a sleeve and the second throttle element (14) is arranged inside the first throttle element (13).

9. Armature assembly according to Claim 8, **characterized in that** the first throttle element (13) has one or more tooth-like recesses (19) arranged one behind the other in the direction (L) of the channel and the second throttle element (14) has one or more projecting disc sections (20) arranged one behind the other in the direction (L) of the channel, wherein the disc sections (20) and the recesses (19) are arranged relative to one another such that, in an opened state of the secondary throttle module (12), flow through the tooth-like recesses (19) is set via the disc sections (20).

10. Armature assembly according to one of Claims 1 to 9, **characterized in that** movable throttle elements (13) are arranged on a secondary throttle guide rail which extends at least partially inside the channel (4) .

11. Armature assembly according to one of Claims 1 to 10, **characterized in that** the at least one secondary throttle module (12) can be displaced independently of the primary throttle module (6).

12. Armature assembly according to one of Claims 1 to 11, **characterized in that** the at least one secondary throttle module (12) can be displaced together with the primary throttle module (6).

13. Armature assembly according to Claim 12, **characterized in that** the primary throttle module (6) has a primary throttle guide rail which is connected to the secondary throttle guide rail or which is formed together with the secondary throttle guide rail.

14. Armature assembly according to one of Claims 1 to 13, **characterized in that** two or more secondary throttle modules (12) are arranged in the channel (4) .

15. Armature assembly according to one of Claims 1 to 14, **characterized in that** the channel (4) is not angled.

16. Armature assembly according to one of Claims 1 to 15, **characterized in that** the housing (1) has a single-part design.

## Revendications

1. Agencement de robinetterie pourvu d'un boîtier (1), comprenant au moins deux ouvertures (2, 3) ainsi que d'un conduit (4) s'étendant dans le boîtier (1) entre les ouvertures (2, 3), dans lequel un module d'étranglement primaire (6) est disposé de manière mobile dans une partie d'étranglement (5) du conduit (4) de façon à limiter la section transversale du conduit (4) dans la partie d'étranglement (5), dans lequel au moins un module d'étranglement secondaire (12) composé d'au moins un premier et d'un deuxième élément d'étranglement (13, 14) est disposé dans le conduit (4) dans la direction de conduit (L) avant ou après le module d'étranglement primaire (6), dans lequel les éléments d'étranglement (13, 14) du module d'étranglement secondaire (12) peuvent être déplacés les uns par rapport aux autres de telle sorte que dans un état opérationnel la résistance à l'écoulement d'un fluide en écoulement change en fonction de la position des éléments d'étranglement (13, 14),
**caractérisé en ce que** les éléments d'étranglement (13, 14) sont réalisés et disposés les uns par rapport aux autres de telle sorte qu'une superficie de section transversale pouvant être traversée effectivement dans le conduit (4) change lorsque les éléments d'étranglement (13, 14) du module d'étranglement secondaire (12) sont déplacés les uns par rapport aux autres, et au moins l'un des éléments d'étranglement (13, 14) présente un ou plusieurs perçages (15, 16, 16', 16") qui constituent la superficie de la section transversale pouvant être effectivement traversée, et la rotation et/ou le déplacement du premier élément d'étranglement (13) permet de libérer ou de bloquer certains de ces perçages (15, 16, 16', 16").

2. Agencement de robinetterie selon la revendication 1, **caractérisé en ce qu'**au moins le premier élément d'étranglement (13) est réalisé comme un élément d'étranglement mobile et au moins le deuxième élément d'étranglement (14) est réalisé comme un élément d'étranglement fixe.

3. Agencement de robinetterie selon la revendication 2, **caractérisé en ce que** les éléments d'étranglement (14) fixes sont formés directement dans le boîtier (1).

4. Agencement de robinetterie selon la revendication 2, **caractérisé en ce que** les éléments d'étranglement (14) fixes sont formés dans une douille qui est disposée dans le conduit (4) et est fixée par rapport aux parois de conduit (15).

5. Agencement de robinetterie selon l'une quelconque des revendications 1 à 4, **caractérisé en ce que** le premier élément d'étranglement (13) est mobile par rapport au deuxième élément d'étranglement (14) dans la direction de conduit (L).

6. Agencement de robinetterie selon l'une quelconque des revendications 1 à 5, **caractérisé en ce que** le premier élément d'étranglement (13) peut tourner par rapport au deuxième élément d'étranglement (14).

7. Agencement de robinetterie selon l'une quelconque des revendications 1 à 6, **caractérisé en ce qu'**au moins le premier et le deuxième élément d'étranglement (13, 14) sont disposés l'un à côté de l'autre dans la direction de conduit (L).

8. Agencement de robinetterie selon l'une quelconque des revendications 1 à 7, **caractérisé en ce que** le premier élément d'étranglement (13) est réalisé en forme de douille, et le deuxième élément d'étranglement (14) est disposé à l'intérieur du premier élément d'étranglement (13).

9. Agencement de robinetterie selon la revendication 8, **caractérisé en ce que** le premier élément d'étranglement (13) présente une ou plusieurs saillies arrière (19) en forme de dent, disposées les unes après les autres dans la direction de conduit (L), et le deuxième élément d'étranglement (14) présente une ou plusieurs parties de disque (20) saillantes, disposées les unes après les autres dans la direction de conduit (L), dans lequel les parties de disque (20) et les saillies arrière (19) sont disposées les unes par rapport aux autres de telle sorte que dans un état ouvert du module d'étranglement secondaire (12), un écoulement à travers les saillies arrière (19) en forme de dent passant par les parties de disque (20) se produit.

10. Agencement de robinetterie selon l'une quelconque des revendications 1 à 9, **caractérisé en ce que** des éléments d'étranglement mobiles (13) sont disposés sur un rail de guidage d'étranglement secondaire qui s'étend au moins par endroits à l'intérieur du conduit (4) .

11. Agencement de robinetterie selon l'une quelconque des revendications 1 à 10, **caractérisé en ce que** ledit au moins un module d'étranglement secondaire (12) peut être déplacé indépendamment du module d'étranglement primaire (6).

12. Agencement de robinetterie selon l'une quelconque des revendications 1 à 11, **caractérisé en ce que** ledit au moins un module d'étranglement secondaire (12) peut être déplacé conjointement avec le module d'étranglement primaire (6).

13. Agencement de robinetterie selon la revendication 12, **caractérisé en ce que** le module d'étranglement primaire (6) présente un rail de guidage d'étranglement primaire qui est relié au rail de guidage d'étranglement secondaire ou qui est réalisé en commun avec le rail de guidage d'étranglement secondaire.

14. Agencement de robinetterie selon l'une quelconque des revendications 1 à 13, **caractérisé en ce que** deux ou plusieurs modules d'étranglement secondaires (12) sont disposés dans le conduit (4).

15. Agencement de robinetterie selon l'une quelconque des revendications 1 à 14, **caractérisé en ce que** le conduit (4) ne présente aucun coude.

16. Agencement de robinetterie selon l'une quelconque des revendications 1 à 15, **caractérisé en ce que** le boîtier (1) est réalisé d'un seul tenant.
